# DEMANDE DE BREVET EUROPEEN

(11) **EP 0 675 661 A1**
(43) Date de publication de la demande: **04.10.1995**
(21) Numéro de dépôt: 95400674.8
(22) Date de dépôt: 27.03.1995
(51) Int. Cl.: H04Q 7/32

(54) **Dispositif de chargement automatique du logiciel de commande dans un radiotéléphone portatif**

(30) Priorité: 30.03.1994 FR 9403784
(71) Demandeur: ALCATEL MOBILE COMMUNICATION FRANCE, 75008 Paris (FR)
(72) Inventeur: Labbe, Laurent, F-92360 Meudon la Foret (FR); Pinault, Francis, F-92270 Bois Colombes (FR)
(74) Mandataire: El Manouni, Josiane

(57) **Abrégé**

Dispositif (10) de chargement automatique du logiciel de commande d'un terminal de communication de données portatif (32) tel qu'un radiotéléphone portatif, comprenant une unité de commande (12), une mémoire de référence (22) contenant la dernière version du logiciel de commande à utiliser par le terminal et une interface (30) pour connecter le terminal portatif (32) et charger automatiquement la dernière version du logiciel de commande dans la mémoire du terminal portatif (32).

Le dispositif (10) comprend un modem (26) permettant la connexion du dispositif (10) à une station centrale et la transmission par cette dernière de la dernière version du logiciel de façon à emmagasiner le logiciel simultanément dans la mémoire de référence (22) du dispositif de chargement et dans la mémoire interne du terminal portatif (32).

## Description

La présente invention concerne la mise à jour du logiciel de commande d'un terminal portatif, et en particulier, un dispositif de chargement automatique du logiciel de commande d'un terminal portatif, notamment d'un radiotéléphone portatif.

Dans les systèmes radiotéléphoniques de type GSM, le terminal ou radiotéléphone portatif à la disposition de chaque utilisateur comporte un logiciel de commande interne. Ce logiciel fait l'objet de mises à jour et l'utilisateur du radiotéléphone doit aller dans une agence ou station centrale dans le but de procéder à la mise à niveau du logiciel de son appareil. Cette démarche étant fastidieuse, beaucoup d'utilisateurs ne passent pas à l'agence remettre leur logiciel à niveau.

C'est pourquoi, un but de l'invention est de réaliser un dispositif de chargement automatique du logiciel de commande d'un terminal portatif que l'utilisateur peut mettre en oeuvre directement sans avoir à se déplacer dans une agence.

Un autre but de l'invention est de fournir un procédé de chargement du logiciel de commande d'un terminal portatif dans lequel le chargement du logiciel se fait automatiquement après connexion du terminal à un dispositif de chargement automatique.

Par conséquent, un premier objet de l'invention est un dispositif de chargement automatique du logiciel de commande d'un terminal portatif comprenant une unité de commande, un modem interconnecté entre l'unité de commande et le réseau téléphonique de manière à relier le dispositif de chargement à une station centrale et recevoir la dernière version du logiciel, une mémoire de référence connectée à l'unité de commande pour emmagasiner automatiquement la dernière version du logiciel, et une interface pour connecter le terminal et charger automatiquement la dernière version du logiciel de commande à partir de la mémoire de référence du dispositif dans la mémoire du terminal.

Un autre objet de l'invention est un procédé de chargement automatique utilisant le dispositif ci-dessus et comprenant les étapes suivantes effectuées sous le contrôle de l'unité de commande du dispositif et après connexion du terminal sur l'interface du dispositif :
- détection que le terminal est connecté sur l'interface du dispositif de chargement,
- envoi d'une requête au terminal demandant la transmission de l'identification du logiciel utilisé par le terminal,
- après transmission de l'identification du logiciel utilisé par le terminal, comparaison de celle-ci avec l'identification courante du logiciel emmagasiné dans la mémoire de référence du dispositif, et
- si l'identification du logiciel de commande du terminal n'est pas l'identification courante, transmission du logiciel de commande emmagasiné dans la mémoire de référence vers le terminal pour emmagasinage du logiciel dans la mémoire interne du terminal.

Encore un autre objet de l'invention est un procédé de chargement automatique utilisant le dispositif de chargement automatique ci-dessus connecté à une station centrale au moyen d'un modem, comprenant les étapes suivantes après la transmission par le terminal de l'identification du logiciel de commande couramment utilisé par le terminal :
- envoi par l'unité de commande du dispositif de chargement de l'identification du logiciel couramment utilisé par le terminal à la station centrale,
- comparaison par la station centrale entre l'identification du logiciel couramment utilisé par le terminal et l'identification courante du logiciel à utiliser,
- si l'identification du logiciel utilisé par le terminal n'est pas l'identification courante du logiciel à utiliser, transmission par la station centrale du logiciel de commande à utiliser pour simultanément emmagasiner le logiciel dans la mémoire tampon du dispositif et transmettre le logiciel au terminal pour emmagasinage dans sa mémoire interne, et
- emmagasinage par l'unité de commande du logiciel de commande à utiliser dans la mémoire de référence du dispositif par transfert à partir de la mémoire tampon.

Ces buts, objets et autres caractéristiques de la présente invention sont maintenant expliqués dans la description qui suit, faite en référence aux dessins joints dans lesquels :
la figure 1 représente un bloc-diagramme du dispositif de chargement automatique de logiciel selon la présente invention,
la figure 2 est un organigramme illustrant les différentes étapes du procédé de chargement automatique de logiciel utilisant le dispositif représenté sur la figure 1 lorsque le chargeur n'est pas connecté à la station centrale, et
la figure 3 représente un organigramme illustrant les différentes étapes du procédé de chargement automatique du logiciel selon l'invention, lorsque le chargeur est connecté à la station centrale.

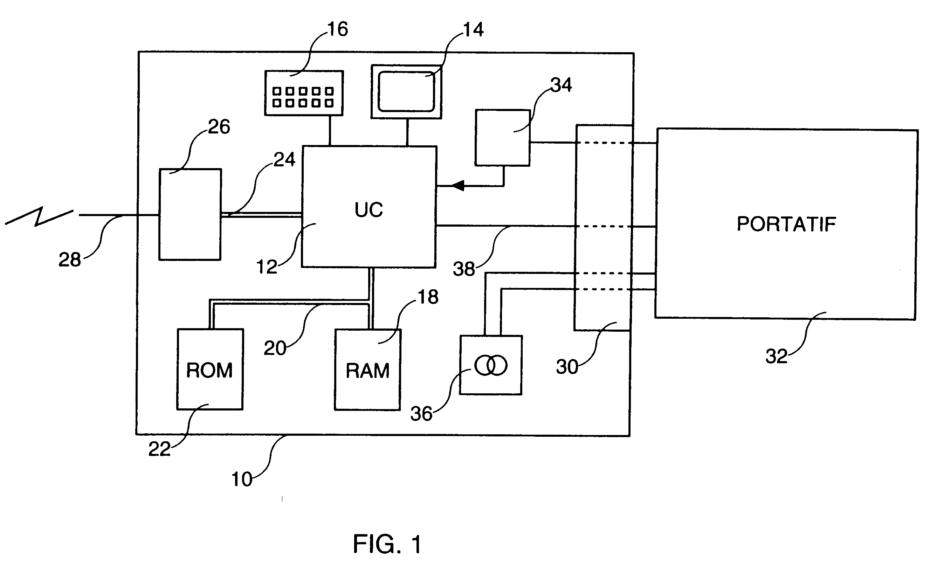

Le dispositif de chargement automatique 10 selon l'invention représenté schématiquement sur la figure 1, comprend une unité de commande (UC) 12 qui peut être du type microprocesseur avec son écran 14 et son clavier 16. L'unité de commande 12 est connectée à une mémoire 18 du type RAM par le bus 20 et également à une mémoire permanente reprogrammable 22, de préférence de type communément appelé "flash". La mémoire 22 dans laquelle est emmagasiné le logiciel de commande mis à jour, est appelée la mémoire de référence du dispositif.

L'unité de commande 12 est connectée par un bus de données 24 à un modem 26 de façon à pouvoir transmettre et recevoir des données sur la ligne téléphonique reliée au réseau téléphonique.

Le dispositif de chargement automatique 10 comprend une interface 30 sur laquelle vient se connecter un terminal portatif 32 tel qu'un radiotéléphone portatif. La connexion d'un terminal portatif sur l'interface 30 est détectée par le circuit de détection de présence 34 connecté à l'unité de commande dans le but d'avertir cette dernière de la présence du terminal portatif.

L'unité de commande est connectée à l'interface 30 au moyen d'une ligne de transfert de données 38, de préférence une ligne de transfert en série, par exemple du type I2C.

Enfin, le dispositif de chargement automatique 10 comporte également un chargeur de batterie 36 destiné à recharger la batterie du terminal portatif à chaque fois que ce dernier est connecté sur l'interface 30.

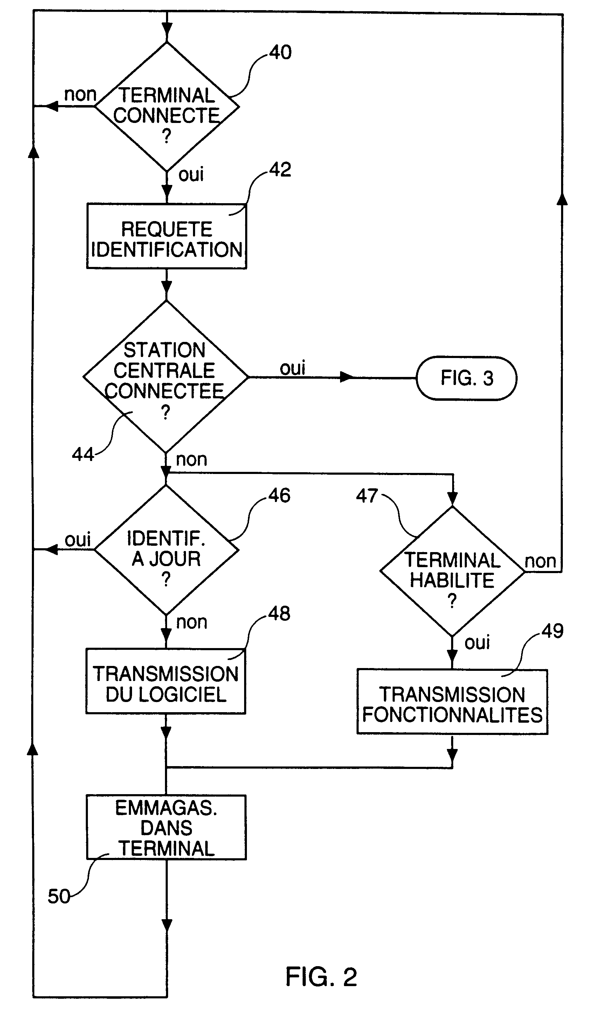

Le procédé de chargement automatique du logiciel de commande dans le terminal portatif est illustré par l'organigramme de la figure 2.

Tout d'abord, vérification est faite au bloc 40, que le terminal 32 est connecté sur l'interface 30. Ceci peut être aisément réalisé par bouclage de masse ou interrupteur micronique.

Si le terminal est connecté sur l'interface, l'unité de commande 12 transmet, bloc 42, une requête d'identification au terminal qui transmet en retour l'identification du logiciel de commande utilisé par le terminal.

A ce point, l'unité de commande s'assure, au bloc 44, si le dispositif de chargement 10 a été connecté au réseau téléphonique au moyen du modem 26. Si ce n'est pas le cas, l'unité de commande procède à la comparaison, au bloc 46, entre l'identification du logiciel de commande utilisé par le terminal et l'identification du logiciel mis à jour. Si la comparaison est positive, le processus est interrompu et reboucle au début. Sinon, le logiciel de commande contenu dans la mémoire de référence 20 est transmis, bloc 48, au terminal portatif pour emmagasinage dans sa mémoire, bloc 50, au moyen de la ligne de transfert de données 38. Le processus est alors rebouclé au début.

A ce point de la description, il est bon de préciser que la facturation du logiciel de commande peut se faire au numéro d'identification du terminal ou au numéro du chargeur. Ce dernier cas peut avoir lieu lorsque le chargeur est fourni par l'opérateur (tel qu'un organisme en charge du réseau téléphonique). Dans les deux cas, l'opérateur fournit par l'intermédiaire de la station centrale, un certain nombre de services (par exemple le renvoi d'appel) permettant un certain nombre de fonctionnalités à l'utilisateur. Si l'utilisateur est intéressé, l'opérateur dispose de deux manières de mettre à disposition des fonctionnalités autres que la nouvelle version du logiciel suivant les constructeurs de chargeurs ou de terminaux :
- un filtrage au niveau de la partie réseau sur le numéro d'abonné (appelé habituellement discrimination dans le langage des téléphonistes), ou
- un filtrage au niveau du terminal sur les autorisations de service (appelé table des services autorisés dans le langage GSM).

Etant donné ce qui précède, après le bloc 44 et indépendamment de la transmission du logiciel, il y a donc reconnaissance au bloc 47, de l'habilitation du terminal à recevoir un certain nombre de fonctionnalités. Si le terminal n'est pas habilité (l'utilisateur n'a pas souscrit d'abonnement aux services correspondants), le processus est rebouclé au début. Si par contre le terminal est habilité à recevoir ces fonctionnalités, il y a transmission des fonctionnalités au bloc 49 à partir de la mémoire du chargeur dans laquelle ont été emmagasinées les mises à jour des fonctionnalités ou de nouvelles fonctionnalités lors d'une connexion du chargeur à la station centrale. Le processus prend fin par l'emmagasinage des fonctionnalités dans la mémoire du terminal au bloc 50.

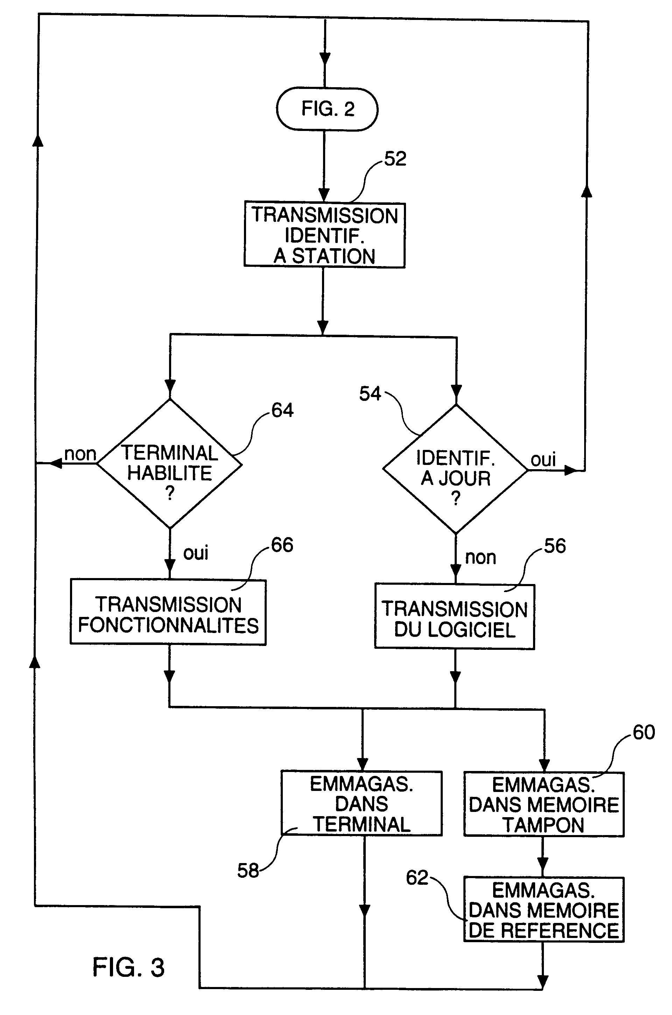

Revenant au bloc 44, il est possible de connecter le dispositif de chargement automatique au réseau téléphonique avant que le terminal portatif soit connecté sur l'interface du dispositif. Dans ce cas, l'opérateur se connecte, par appel téléphonique, sur la station centrale qui a à sa disposition, généralement dans une base de données adéquate, la dernière version du logiciel de commande. En référence à la figure 3 au bloc 52, l'unité de commande transmet l'identification du logiciel utilisé par le terminal portatif à la station centrale. Cette identification est comparée à celle de la dernière version du logiciel emmagasinée dans la base de données de la station, au bloc 54.

Si, au bloc 54, il s'avère que le logiciel de commande utilisé par le terminal est la dernière version de la station centrale, le processus prend fin et se reboucle au début. Sinon, la station centrale procède, au bloc 56, à la transmission du logiciel de commande à jour vers le dispositif de chargement 10. L'unité de commande 12 procède alors à deux opérations lorsqu'elle reçoit le logiciel à partir de la station centrale. Elle transmet sur la ligne 38, le logiciel au terminal pour emmagasinage dans sa mémoire propre, bloc 58. Mais elle procède également à l'emmagasinage du logiciel de commande dans sa mémoire tampon 18, bloc 60. Puis, après que la nouvelle version du logiciel de commande a été emmagasinée dans la mémoire tampon 18, le transfert est effectué, bloc 62, de la mémoire tampon 18 à la mémoire de référence 22. Cette opération en deux temps est nécessaire dans la mesure où, si l'emmagasinage se faisait directement dans la mémoire de référence, les problèmes éventuels de la ligne téléphonique utilisée pour la transmission entre la station centrale et le dispositif de chargement, pourraient amener des erreurs dans le logiciel transmis et avoir pour conséquence que le dispositif de chargement n'ait plus aucune version (sans erreurs) du logiciel de commande.

Comme précédemment, à l'identification du terminal ou du chargeur ou des deux, la station centrale vérifie si le terminal est habilité à recevoir un certain nombre de fonctionnalités au bloc 64, ceci de façon indépendante de la mise à jour du logiciel de commande. Si ce n'est pas le cas, le processus reboucle au début. Si le terminal est habilité, il y a transmission desdites fonctionnalités à partir de la station centrale au bloc 66. Les données sont comme précédemment, emmagasinées dans la mémoire du terminal d'une part (bloc 58), et d'autre part emmagasinées dans la mémoire tampon du chargeur (bloc 60) avant d'être emmagasinées dans la mémoire de référence du chargeur (bloc 62).

Il est bien sûr possible de charger la dernière version du logiciel de commande ainsi que les mises à jour des fonctionnalités ou les fonctionnalités nouvelles mises à disposition par l'opérateur (lorsque le chargeur ou les terminaux qui peuvent lui être connectés sont habilités à les recevoir) à partir de la station centrale dans le dispositif de chargement automatique 10. Dans ce cas, après connexion du dispositif à la station centrale au moyen du réseau téléphonique, il est procédé à la transmission de la dernière version du logiciel de commande et des fonctionnalités, de la station centrale au dispositif de chargement et leur emmagasinage dans la mémoire tampon 18, puis transfert dans la mémoire de référence 22, de la même façon que précédemment aux étapes 60 et 62.

On doit noter qu'une possibilité est de maintenir continuellement le chargeur connecté au réseau téléphonique. Dans ce cas, le simple branchement d'un terminal autorisé à être branché sur ce chargeur permettra d'acquérir la version à jour du logiciel ou les mises à jour des fontionnalités fournies par l'opérateur, ou de nouvelles fonctionnalités, sans avoir à appeler la station centrale.

## Revendications

1. Dispositif (10) de chargement automatique du logiciel de commande d'un terminal de communication de données portatif (32) comprenant :
une unité de commande (12)
un modem (26) interconnecté entre l'unité de commande et une ligne téléphonique (28), ladite ligne téléphonique pouvant être reliée à une station centrale de manière à recevoir, par l'intermédiaire dudit modem, la dernière version du logiciel de commande du terminal portatif,
une mémoire de référence (22) connectée à l'unité de commande pour emmagasiner automatiquement la dernière version du logiciel de commande,
une interface (30) pour connecter le terminal portatif et charger automatiquement ladite dernière version du logiciel de commande à partir de ladite mémoire de référence dans la mémoire du terminal.

2. Dispositif (10) selon la revendication 1, comprenant en outre une mémoire tampon (18) connectée à ladite unité de commande (12) et destinée à emmagasiner ladite dernière version dudit logiciel de commande reçue de ladite station centrale par l'intermédiaire de ladite ligne téléphonique (28) et dudit modem (26), ladite dernière version du logiciel étant automatiquement emmagasinée dans ladite mémoire de référence (22) à partir de ladite mémoire tampon dès que celle-ci a fini de recevoir ladite dernière version du logiciel de commande.

3. Dispositif (10) selon la revendication 1 ou 2, comportant en outre un moyen (36) de chargement de la batterie d'alimentation dudit terminal portatif devenant opérationnel lorsque ledit terminal portatif est connecté sur l'interface (30) du dispositif.

4. Dispositif (10) selon la revendication 1, 2 ou 3, dans lequel ledit terminal portatif (32) est un radiotéléphone portatif.

5. Procédé de chargement automatique d'un logiciel de commande d'un terminal de communication de données portatif (32) utilisant un dispositif (10) selon l'une des revendications 1 à 4, comprenant les étapes suivantes effectuées sous le contrôle de l'unité de commande (12) dudit dispositif de chargement automatique et après connexion du terminal portatif sur l'interface (30) dudit dispositif de chargement automatique :
détection que ledit terminal portatif est connecté sur ladite interface,
envoi d'une requête audit terminal demandant la transmission de l'identification du logiciel de commande couramment utilisé par ledit terminal portatif,
après la transmission de ladite identification du logiciel de commande, comparaison de cette dernière avec l'identification courante du logiciel de commande emmagasiné dans ladite mémoire de référence (22), et
si ladite identification du logiciel de commande couramment utilisé par ledit terminal portatif n'est pas ladite identification courante, transmission du logiciel de commande emmagasiné dans ladite mémoire de référence vers ledit terminal portatif pour emmagasinage dudit logiciel dans sa mémoire interne.

6. Procédé de chargement automatique selon la revendication 5, comprenant en outre les étapes suivantes après la demande d'identification du logiciel de commande :
vérification de l'habilitation dudit terminal à recevoir un certain nombre de fonctionnalités pouvant être mises en oeuvre par l'utilisateur du terminal, et
transmission desdites fonctionnalités si ledit terminal est habilité à les recevoir pour emmagasinage dans sa mémoire interne.

7. procédé de chargement automatique d'un logiciel de commande d'un terminal de communication de données portatif (32) à l'aide d'un dispositif (10) selon l'une des revendications 1 à 4, connecté à ladite station centrale au moyen de ladite ligne téléphonique (28) et dudit modem (26), comprenant les étapes suivantes :
connexion du terminal portatif sur l'interface (30) dudit dispositif de chargement automatique,
détection par ladite unité de commande (12) que ledit terminal portatif est connecté sur ladite interface,
envoi d'une requête par ladite unité de commande audit terminal portatif demandant la transmission de l'identification du logiciel de commande couramment utilisé par ledit terminal portatif,
envoi par ladite unité de commande de ladite identification du logiciel utilisé par le terminal portatif à ladite station centrale au moyen dudit modem et de ladite ligne téléphonique,
comparaison par ladite station centrale entre ladite identification du logiciel couramment utilisé par ledit terminal portatif et l'identification courante du logiciel à utiliser,
si ladite identification du logiciel utilisé par ledit terminal portatif n'est pas ladite identification courante du logiciel à utiliser, transmission par ladite station centrale du logiciel de commande à utiliser pour simultanément emmagasiner ledit logiciel dans ladite mémoire tampon (18) et transmettre ledit logiciel audit terminal portatif pour emmagasinage dans sa mémoire interne, et
emmagasinage par ladite unité de commande dudit logiciel de commande à utiliser dans ladite mémoire de référence (22) par transfert à partir de ladite mémoire tampon.

8. procédé de chargement automatique selon la revendication 7, comprenant en outre les étapes suivantes après la demande d'identification du logiciel de commande :
vérification de l'habilitation dudit terminal à recevoir un certain nombre de fonctionnalités pouvant être mises en oeuvre par l'utilisateur du terminal,
transmission desdites fonctionnalités par ladite station centrale pour simultanément emmagasiner lesdites fonctionnalités dans ladite mémoire tampon (18) et les transmettre audit terminal portatif pour emmagasinage dans sa mémoire interne, et
emmagasinage par ladite unité de commande desdites fonctionnalités dans ladite mémoire de référence (22) par transfert à partir de ladite mémoire tampon.
